# EUROPEAN PATENT APPLICATION

(11) **EP 3 650 419 A1**
(43) Date of publication of application: **13.05.2020**
(21) Application number: 18204659.9
(22) Date of filing: 06.11.2018
(51) Int. Cl.: C04B 28/18, C01B 33/24

(54) **METHOD OF MAKING CALCIUM SILICATE BRICKS**

(71) Applicant: Calduran Kalkzandsteen B.V., 3846 BH Harderwijk (NL)
(72) Inventor: TEMMERMANS, Frans, 3849 PB Hierden (NL); TROMP, Olof, 7691 AR Bergentheim (NL)
(74) Representative: Gill Jennings & Every LLP

(57) **Abstract**

A process for making calcium silicate bricks is provided. A source of nitrate ions is used in order to accelerate the hydration of quicklime.

## Description

### Field of the invention

The invention relates to calcium silicate bricks and methods of making calcium silicate bricks.

### Background

In the traditional production process for calcium silicate bricks (CSB), quicklime is hydrated (slaked) in a reactor with other components. This results in an increased volume of the mixture.

This necessary step costs time. The duration that the mixture must spend in the slaking reactor depends on the type of quicklime that is chosen and the external temperature. The external temperature matters, because this generally equates to the temperature of the starting materials. The reaction period for slaking quicklime takes longer when the external temperature is lower, for example during winter, and thus the time required in the reactor is also longer. The slaking reaction is exothermic, so the quantity of quicklime in the mixture influences the temperature in the reactor.

There are two main issues with the traditional process.

Firstly, a long duration in the reactor for the slaking (hydration) step reduces the production capacity of the process.

Secondly, if the duration in the reactor is insufficient, there is a risk of producing calcium silicate bricks with a mixture that isn't fully slaked. Using a mixture that is incompletely slaked is deleterious on the quality of the finished calcium silicate bricks: when slaking continues in the autoclave that is used for hardening the bricks, the result is fractures in the calcium silicate bricks. The fractures are caused by the expansion that results from the slaking process. Any calcium silicate bricks with fractures may be disapproved for low quality, thus wasting materials and energy.

Previous attempts to avoid the problems associated with incomplete slaking have focused on increasing the amount of quicklime in the mixture, or increasing the amount of time the mixture spends in the slaking reactor vessel. The rationale behind the first of these previous approaches is that the temperature inside the reactor increases if more quicklime is added, due to its exothermic reactions. The second approach reduces the risk of incomplete slaking and thus reduces the risk of cracks forming in the hardening stage, but comes at the cost of dramatically increasing the overall production time and therefore is rather inefficient.

It would be desirable to find an alternative approach, because the extra quicklime adds to materials costs and the extra time in the reactor is economically undesirable. Furthermore, it would be desirable to use a similar or the same relative quantities of starting materials regardless of the external temperature and to have greater control over the slaking stage.

### Summary

The present invention solves the problems described above with a new process for making calcium silicate bricks.

The invention provides for the use of a source of nitrate anions in a process for making calcium silicate bricks.

The invention also provides a process for making calcium silicate bricks, the process comprising
a) providing starting materials, the starting materials comprising water, quicklime and sand;
b) mixing the starting materials to form a mixture;
c) shaping the mixture;
d) hardening the mixture
**characterised in that** the starting materials further comprise a source of nitrate ions.

Using nitrate ions in the process for making calcium silicate bricks results in higher production capacity and lower production costing.

When the external temperature, i.e. the temperature of the starting materials, is high enough, preferably at least 15 °C, more preferably at least 20 °C, the need for a separate slaking step is removed, thereby further increasing the efficiency of the process. In this case, the quicklime and the water react during the mixing step to form slaked lime as a part of the mixture.

The reaction between starting materials, in particular the reaction between H₂O and CaO, is faster when using a source of nitrate ions as an accelerator in accordance with the invention, and it is more stable and more predictable compared to the traditional process that did not make use of nitrate ions as an accelerator.

The risk of unreacted quicklime persisting to the hardening stage is much reduced when using the process of the invention. This results in fewer rejected finished calcium silicate bricks, because the risk of cracking (due to expansion during the hardening stage if unreacted quicklime remains) is reduced compared to previous production methods.

Using the invention, the difference in process time between winter and summer conditions can be reduced, thereby enabling production times to be more consistent throughout the year. Overall capacity of the production process for making calcium silicate bricks can be increased by using the invention.

Advantageously, the hydrating reactor step may be omitted in summer conditions, when the external temperature is at least 15 °C, when the source of nitrate ions is added in accordance with the invention.

The invention is also beneficial in reducing the amount of quicklime required in the starting materials: where prior art processes used excess quicklime to overcome problems with incomplete hydration, no such excess is required in the present invention. This is beneficial in terms of costs and in terms of reducing the use of raw materials, thereby having an environmental benefit.

### Brief description of drawings

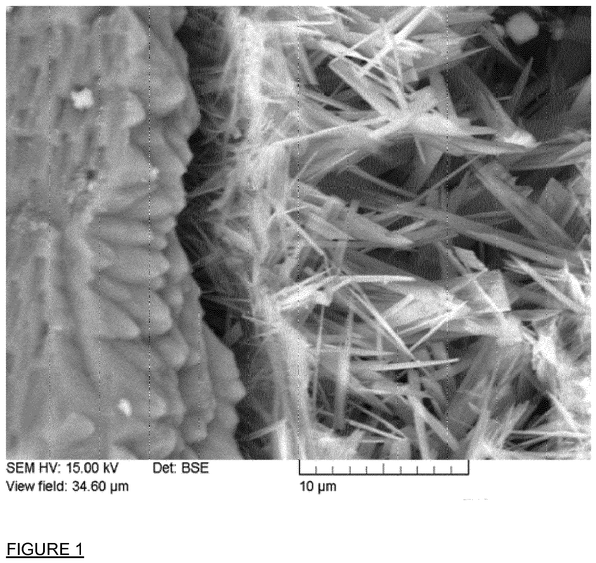

Figure 1 is a scanning electron microscope image of a calcium silicate brick produced in accordance with the invention.

### Detailed description

Any source of nitrate ions may be used to accelerate the reaction between water and calcium oxide (quicklime). The source of nitrate ions may be nitric acid or a nitrate salt. Preferably a nitrate salt is used.

An organic or inorganic salt may be used. Any suitable metal nitrates may be used, in particular a group II metal nitrate salt.

Preferably the nitrate salt is or comprises calcium nitrate. Pure calcium nitrate may be costly and so a related salt, such as ammonium calcium decahydrate, may be used instead of pure Ca(NO₃)₂.

The source of nitrate ions may be dissolved in water prior to dosing of the starting materials. The total amount of water is preferably not increased compared to a process without any accelerator. In other words, a portion of the water from the starting materials is used to dissolve the source of nitrate ions.

The source of nitrate ions is preferably dosed alongside the other starting materials.

The amount of nitrate included in the starting materials depends on several factors. Nevertheless, including an amount of nitrate ions will decrease the time required for the hydration step in the process for making calcium silicate bricks, regardless of the external temperature. In general, the amount of nitrate required to achieve the same effect will increase as the external temperature decreases.

The type of nitrate ions will have an effect on the amount required, for example there are more nitrate ions available per unit weight in nitric acid than in ammonium calcium nitrate decahydrate.

The temperature of the starting materials, i.e. the external temperature, also has an impact on the amount of nitrate ions required for the desired reduction in time for the hydration step.

In winter, when the outside temperature can be around freezing, a relatively high amount of nitrate must be included in order to keep the slaking step as short as in summer. Amounts of up to 1.0 w/w%, preferably no more than 0.75 w/w% and most preferably an amount of approximately 0.5 w/w% of the source of nitrate ions may be included as part of the starting materials. If more nitrate is added, the compressive strength of the finished calcium silicate bricks is reduced compared to processes that do not use a source of nitrate ions as an accelerator. An amount of at least 0.25 w/w% accelerator is preferably used during winter temperatures.

If this much nitrate is included in winter conditions of from 0 °C to 5 °C external temperature, then the hydration step can be completed in approximately 1.5 hours. Previously, the hydration step took several hours during winter conditions and so this is a clear advantage of the invention.

In summer, when the starting materials can already be at the required minimum temperature (approximately 30°C) for the end of the mixing step, using a small amount of nitrate may enable the mixing step to be even shorter in duration than in prior art methods, down to zero hours. In other words, using nitrate as an accelerator when the external temperature is hot may mean that the hydration step can be avoided completely. This is a clear advantage, because production capacity will be increased compared to known processes for making calcium silicate bricks. The minimum external temperature at which the separate slaking step can be avoided is 15 °C.

Preferably, a minimum of 0.025 m/m% of the source of nitrate ions is included, as a percentage of the total amount of starting materials, such as 0.05 m/m%, such as 0.1 m/m%, such as 0.25 m/m%, such as 0.3 m/m%.

Preferably, a maximum of 0.75 m/m%, most preferably a maximum of 0.5 m/m% of the source of nitrate ions is included, as a percentage of the total amount of starting materials.

Higher amounts of the source of nitrate ions are preferred when the external temperature (roughly the temperature of the starting materials) is low. Lower amounts of the source of nitrate ions are preferred when the external temperature is high.

Preferably, when the external temperature (i.e. roughly the temperature of the starting materials) is from 0 °C to 5 °C, an amount of from 0.3 to 0.5 w/w% of the source of nitrate ions is included, as a proportion of the total amount of starting materials. This amount of nitrate allows the hydration step to be completed in a shorter time compared to not using nitrate ions, in particular a time of around 0.5 to 3 hours, comparable to the time of the hydration step in summer in previous processes for making calcium silicate bricks.

Preferably, when the external temperature is from 5 °C to 10 °C, the amount of the source of nitrate ions is from 0.1 to 0.3 w/w%, such as approximately 0.25 w/w% of the total starting materials. With this amount of nitrate, the hydration step can be completed in a shorter time compared to not using nitrate ions, in particular a time of around 0.5 to 3 hours, such as a time of 1 to 2 hours, which is comparable to the time of the hydration step in summer in previous processes for making calcium silicate bricks.

Preferably, when the external temperature is at least 15 °C, the amount of the source of nitrate ions is from 0.02 to 0.1 w/w%, such as from 0.03 to 0.07 w/w%, in particular approximately 0.05 w/w%, of the total starting materials.

The process of the invention involves several steps.

Firstly the starting materials are dosed. This involves measuring the starting materials, which comprise quicklime, sand, water and accelerator, in the correct relative amounts for mixing.

Preferably the amount of sand is in the range 85 to 95 w/w%, such as 88 to 92 w/w%.

Preferably the amount of quicklime is in the range 2 to 7 w/w%, such as 3.5 to 5 w/w%.

Preferably the amount of water is in the range 2 to 8 w/w%, such as 4 to 6.5 w/w%. This amount includes any water that may be used to dissolve the accelerator.

Preferably the amount of accelerator (source of nitrate ions), measured as dry weight, is in the range 0.02 to 2 w/w%, such as 0.03 to 1 w/w%, in particular from 0.05 to 0.5 w/w%.

The mixing step ensures that the starting materials are thoroughly and homogenously mixed, to enable a uniform finished product to be obtained at the end of the whole process. During the mixing stage, if the temperature is sufficiently high (approximately 30°C), the quicklime component will react with the water.

The mixing step is preferably carried out for an amount of time in the interval from 60 to 400 seconds, more preferably from 120 to 240 seconds.

Optionally, the dry ingredients are combined and mixed prior to adding and mixing the water.

It is optional to have a separate hydration step following the mixing step. A separate hydration step is necessary in previously known processes, because the quicklime is not normally sufficiently hydrated by the end of the mixing stage. However, when using the accelerator of the present invention, it is possible to avoid having a separate hydration step, if the external temperature is not too cold. If the hydration step is to be avoided, the external temperature should preferably be at least 15 °C, more preferably at least 20 °C. Using the invention, if the hydration step is needed, it will require less time than prior art processes, thereby improving the efficiency and capacity of the whole process. The hydration step, if used in the invention, preferably has a duration in the range 1 to 3 hours, such as 1 to 2 hours. Previous processes for making calcium silicate bricks required a longer hydration time in winter, for example from 2 to 4 hours. The invention thus provides an improvement in the overall process efficiency and production capacity, even in winter.

The hydration step may be separate from or on-line with the mixing step.

Following the mixing step or the optional hydration step, the resulting mixture, in which the quicklime is slaked, is shaped into the required dimensions for the final calcium silicate brick. During shaping, a small amount of additional water may be included to aid shaping.

The shaped mixture is then hardened. The hardening step may take place in an autoclave, according to standard practice. Preferably the hardening step is carried out for approximately 5 to 13 hours, depending on the temperature and on the size of the bricks: smaller bricks require less time in the autoclave.

In one embodiment of the invention, the starting materials have a temperature of at least 20 °C prior to dosing. 0.05 m/m% of calcium nitrate (or a related salt) is included in the starting materials as an aqueous solution. The starting materials are dosed (measured), mixed and then shaped. Optionally, a small amount of extra water may be included to aid shaping. The shaped mixture is hardened in an autoclave, thereby forming a calcium silicate brick. There is no separate hydration step and the calcium silicate brick does not undergo any significant expansion during the hardening step.

In one embodiment of the invention, the starting materials have a temperature in the range 5 °C to 10 °C prior to dosing. 0.25 m/m% of calcium nitrate (or a related salt) is included in the starting materials as an aqueous solution. The starting materials are dosed (measured), mixed, subjected to a hydration step and then shaped. Optionally, a small amount of extra water may be included to aid shaping. The shaped mixture is hardened in an autoclave, thereby forming a calcium silicate brick. The hydration step has a duration of time in the range 1 to 2 hours.

In one embodiment of the invention, the starting materials have a starting temperature in the range 0 to 5 °C prior to dosing. 0.5 m/m% of calcium nitrate (or a related salt) is included in the starting materials as an aqueous solution. The starting materials are dosed (measured), mixed and then shaped. Optionally, a small amount of extra water may be included to aid shaping. The shaped mixture is hardened in an autoclave, thereby forming a calcium silicate brick. There is no separate hydration step and the calcium silicate brick does not undergo any significant expansion during the hardening step.

### Examples

### Example 1

Example 1 demonstrates the need for the present invention. Sample 1 is a reference sample, showing normal conditions for making calcium silicate bricks prior to this invention. Sample 2 is a comparative sample, not in accordance with the invention.

To make Samples 1 and 2, sand, quicklime and water were mixed together in a mixer for a period of approximately 100 seconds. This was broken down as approximately 20 second mixing the sand, approximately 15 seconds mixing the dry ingredients together, i.e. the sand and quicklime, and approximately 65 seconds mixing the dry and wet ingredients together. In Sample 1, the resulting mixture was transferred to a separate reactor for hydration (i.e. reaction between water and quicklime) for a period of approximately 1.5 hours. In Sample 2, the hydration reactor was omitted. Both Samples 1 and 2 were then shaped to the required dimensions (the same dimensions for both Samples 1 and 2) and then hardened in an according to standard practice.

If hydration is incomplete prior to the hardening stage, it will continue in the hardening stage, resulting in expansion of the brick due to expulsion of matter from the hydration process. The change in length was measured as being indicative of the change in size in all three dimensions.

| | Sample 1 (reference) | Sample 2 (comparative) |
|---|---|---|
| Sand, w/w% | 90 | 90 |
| Quicklime, w/w % | 5 | 5 |
| Water, w/w% | 5 | 5 |
| Accelerator, w/w % | 0 | 0 |
| External temperature, °C | 15 | 15 |
| Time in hydration reactor, hours | 1.5 | 0 |
| Length of brick, mm | 997 | 1002 |
| Expansion relative to Sample 1, mm | N/A | 5 |

By comparing Samples 1 and 2, it can be seen that it is essential to use a separate hydration step in order to avoid expansion of the calcium silicate brick during the hardening stage. Expansion of 5 mm compared to normal conditions is unacceptable, because there is a high chance of defects such as cracks being present in the calcium silicate brick. For this reason, a separate hydration reactor has, before our invention, been considered to be essential in the process for making calcium silicate bricks.

### Example 2

This example shows that, by using the invention, the separate hydration step can be omitted without causing any significant expansion of the calcium silicate brick during the hardening stage. The mixing, shaping and hardening steps were the same as for Example 1. The accelerator was mixed with the sand from the first part of the mixing step. Sample 3 included 0.5 w/w% of ammonium calcium nitrate decahydrate as an accelerator.

| | Sample 1 (reference) | Sample 3 (invention) |
|---|---|---|
| Sand, w/w% | 90 | 90 |
| Quicklime, w/w % | 5 | 5 |
| Water, w/w% | 5 | 4,5 |
| Accelerator, w/w % | 0 | 0.5 |
| External temperature, °C | 15 | 15 |
| Time in hydration reactor, hours | 1.5 | 0 |
| Length of brick, mm | 997 | 998 |
| Expansion relative to Sample 1, mm | N/A | 1 |

These results show that a significant improvement in process efficiency can be achieved by including a nitrate-based accelerator in the starting materials.

### Example 3

This example demonstrates that the hydration step can be kept as short during winter (Sample 4) as it is normally in the summer (Sample 1) by including a nitrate-based accelerator in the starting materials. The mixing, shaping and hardening steps were the same as used in Example 1. The accelerator was mixed with the sand from the first part of the mixing step. Sample 4 included 0.25 w/w% of ammonium calcium nitrate decahydrate as an accelerator with the starting materials.

| | Sample 1 (reference) | Sample 4 (invention) |
|---|---|---|
| Sand, w/w% | 90 | 90 |
| Quicklime, w/w % | 5 | 5 |
| Water, w/w% | 5 | 4,75 |
| Accelerator, w/w % | 0 | 0.25 |
| External temperature, °C | 15 | 5 |
| Time in hydration reactor, hours | 1.5 | 1.5 |
| Length of brick, mm | 997 | 997 |
| Expansion relative to Sample 1, mm | N/A | 0 |

Prior to our invention, it was necessary to use a relatively long duration for the hydration step: approximately 2 to 4 hours was usual. With our invention, we can use a shorter slaking time during winter, thereby improving the overall efficiency of the process for making calcium silicate bricks.

### Example 4

This example demonstrates that the overall duration of the process for making calcium silicate bricks can be decreased when using our invention. Sample 5 used 0.05 w/w% of ammonium calcium decahydrate with the starting materials. The shaping and mixing steps were the same as Example 1. The accelerator was mixed with the sand from the first part of the mixing step.

| | Sample 1 (reference) | Sample 5 (invention) |
|---|---|---|
| Sand, w/w% | 90 | 90 |
| Quicklime, w/w % | 5 | 5 |
| Water, w/w% | 5 | 4,95 |
| Accelerator, w/w % | 0 | 0.05 |
| External temperature, °C | 15 | 15 |
| Time of mixing step, seconds | 90 | 70 |
| Time in hydration reactor, hours | 1.5 | 1.5 |
| Length of brick, mm | 997 | 997 |
| Expansion relative to Sample 1, mm | N/A | 0 |

This demonstrates that, if the hydration step is retained in summer, the duration of the mixing step can be reduced if a nitrate-based accelerator is used.

The overall teaching of Examples 1 to 4 is that the efficiency of the process for making calcium silicate bricks is increased by including a nitrate-based accelerator with the starting materials, in accordance with our invention.

The total time of the process can be reduced either in the mixing step (Example 4) or the hydration step (Examples 2 and 3).

Without our invention, missing out or shortening either of these steps has deleterious consequences on the quality of the bricks produced (Example 1), because slaking is incomplete prior to hardening.

With our invention, calcium silicate bricks do not suffer from any significant expansion during the hardening stage. This is indicative of the slaking step being completed, even when the hydration step is shortened compared to previous processes (Example 3), or omitted entirely (Example 2). The calcium silicate bricks expand in all directions during hardening if there is residual unslaked quicklime in the shaped mixture. This expansion, and the expulsion of material during slaking, results in defects in the calcium silicate bricks, such as cracks. CSB with defects will be rejected as having insufficient quality. Therefore the invention reduces waste and improves process efficiency.

### Analysis of products

Figure 1 shows a SEM view of a calcium silicate brick made in accordance with the invention. The presence of the desirable needle-like structure on this scale demonstrates that the nitrate accelerator does not have any negative effect on the microstructure of the finished product. The needle-like microstructure is important for the mechanical performance of the finished product.

## Claims

1. Process for making calcium silicate bricks, the process comprising
a) providing starting materials, the starting materials comprising water, quicklime and sand;
b) mixing the starting materials to form a mixture;
c) shaping the mixture;
d) hardening the mixture
**characterised in that** the starting materials further comprise a source of nitrate ions.

2. Process according to claim 1, wherein the source of nitrate ions is a nitrate salt or nitric acid, preferably a nitrate salt.

3. Process according to claim 1 or claim 2, wherein the source of nitrate ions comprises calcium nitrate.

4. Process according to any preceding claim, wherein the source of nitrate ions is ammonium calcium decahydrate.

5. Process according to any preceding claim, wherein a hydration step b2) follows the mixing step b) and precedes the shaping step c).

6. Process according to claim 5, wherein the hydration step b2) is carried out over a period of less than 3 hours, preferably, less than 2 hours, preferably between 1 and 1.5 hours.

7. Process according to any preceding claim, wherein the source of nitrate ions forms from 0.025 to 1.5 w/w% of the starting materials, such as from 0.025 to 1.0 w/w% of the starting materials, such as from 0.2 to 0.4 w/w% of the starting materials, such as from 0.03 to 0.1 w/w% of the starting materials.

8. Process according to any preceding claim, wherein the starting materials have a temperature of less than 20°C.

9. Process according to any preceding claim, wherein the starting materials have a temperature of less than 5°C.

10. Process according to claim 8 or claim 9, wherein the source of nitrate ions forms at least 0.2 w/w% of the starting materials, preferably at least 0.5 w/w% of the starting materials.

11. Process according to any of claims 1 to 7, wherein the starting materials have a temperature of at least 20°C.

12. Process according to claim 11, wherein the source of nitrate ions forms from 0.01 to 0.1 w/w% of the starting materials.

13. Process according to any preceding claim, wherein there is no separate hydration step between the mixing step and the shaping step.

14. Calcium silicate bricks made by the process according to any preceding claim.

15. Use of a source of nitrate ions in a process for making calcium silicate bricks.
